# EUROPEAN PATENT APPLICATION

(11) **EP 4 089 229 A1**
(43) Date of publication of application: **16.11.2022**
(21) Application number: 22168599.3
(22) Date of filing: 14.04.2022
(51) Int. Cl.: D06N 3/00, D06N 3/10, D06N 3/14, B32B 27/12, B32B 27/40, D06M 17/10, A43B 1/00, A43B 23/02, B32B 5/02, B32B 5/26, D04H 1/4358, D04H 1/56

(54) **THERMOPLASTIC ARTIFICIAL LEATHER AND THE MANUFACTURING METHOD THEREOF**

(30) Priority: 13.05.2021 TW 110117230
(71) Applicant: San Fang Chemical Industry Co., Ltd., Kaohsiung City 814037 (TW)
(72) Inventor: LIN, CHIH YI, KAOHSIUNG (TW); CHENG, KUO KUANG, KAOHSIUNG (TW); HUANG, CHIEN CHIA, KAOHSIUNG (TW); TSAI, TSUNG YU, KAOHSIUNG (TW); LEE, CHIEH, KAOHSIUNG (TW); CHEN, WEI-LING, KAOHSIUNG (TW)
(74) Representative: Lang, Christian

(57) **Abstract**

A thermoplastic artificial leather (5a, 5b, 6a, 6b, 7a, 7b, 8a, 8b)(5a, 5b, 6a, 6b, 7a, 7b, 8a, 8b) is provided, which includes a first structure layer (50, 60, 70, 80), a second structure layer (52, 62, 72, 82), a plurality of recycled particles (54, 64, 74, 84), and a third structure layer (56, 66, 76, 86), in which the second structure layer (52, 62, 72, 82) is disposed on the first structure layer (50, 60, 70, 80), the plurality of recycled particles (54, 64, 74, 84) disposed on the second structure layer (52, 62, 72, 82), and the third structure layer (56, 66, 76, 86) is disposed to cover the plurality of recycled particles (54, 64, 74, 84). According to above stacked structure, the thermoplastic artificial leather (5a, 5b, 6a, 6b, 7a, 7b, 8a, 8b) with environment friendly is formed, and the plurality of recycled particles (54, 64, 74, 84) is processed in a physical manner, which can solve the problem, the environmental protection issue, caused by the use of solvent to process the recycled particle in the prior art. Use of the material characteristics of each structure layer to reprocess the recycled particles, so the reprocess procedure without using any solvent, so the environmental pollution and the production cost are greatly reduced.

## Description

### CROSS-REFERENCE TO RELATED APPLICATIONS

This application claims the benefit of TW 110117230, filed on May 13, 2021, which is incorporated in its entirety by reference herein.

### FIELD OF THE INVENTION

The present invention relates to the technical field of artificial leather processing, and more particularly relates to a process of recycling artificial leather, polyurethane and/or waste yarns and formed into particles, and then processed to form thermoplastic artificial leather.

### BACKGROUND OF THE INVENTION

Nowadays, the concept of environmental recycling has received great attention. How to recycle the waste artificial leather produced in the process of shoe making has become a problem that needs to be solved. In the past, only the genuine leather was recycled, while the artificial leather recycling process generally uses a variety of different processes, and some processes require the use of solvents, such as resin impregnation or fiber dissolution. However, the above preparation method will not only make the manufacturing process more complex, but also do not meet the needs of environmental protection requirements.

### SUMMARY OF THE INVENTION

According to the drawbacks of the prior art, the main object of the present invention is to disclose a thermoplastic artificial leather (5a, 5b, 6a, 6b, 7a, 7b, 8a, 8b) and a manufacturing method thereof. In the manufacturing process, the recycled particles are remanufactured by powder spreading technology and composite material technology to form an environmentally friendly thermoplastic artificial leather by physical treatment, to solve the environmental protection problem caused by using solvent to treat the plurality of recycled particles in the prior art.

Another object of the present invention is to disclose thermoplastic artificial leather (5a, 5b, 6a, 6b, 7a, 7b, 8a, 8b). In the manufacturing process, the plurality of recycled particles (54, 64, 74, 84) of treated artificial leather, polyurethane and/or waste yarn can be covered with thermoplastic elastomer meltblown layer to achieve a surface recycling effect. That is, the plurality of recycled particles (54, 64, 74, 84) with different colors can be clearly separated on the surface of the thermoplastic elastomer meltblown layer, and the thermoplastic elastomer meltblown layer can be localized thermal processing according to the required parts, so that the recycling effect of these particles can be clearly displayed.

According to the above objects, the invention discloses a thermoplastic artificial leather (5a, 5b, 6a, 6b, 7a, 7b, 8a, 8b), which includes a first structure layer (50, 60, 70, 80), a second structure layer (52, 62, 72, 82), a plurality of recycled particles (54, 64, 74, 84), and a third structure layer (56, 66, 76, 86), in which the second structure layer (52, 62, 72, 82) is arranged on the first structure layer (50, 60, 70, 80), a plurality of recycled particles (54, 64, 74, 84) is arranged on the surface of the second structure layer (52, 62, 72, 82), and the third structure layer (56, 66, 76, 86) covers the plurality of recycled particles (54, 64, 74, 84), to form environmentally friendly thermoplastic artificial leather.

In one preferred embodiment of the present invention, the density range of the plurality of recycled particles (54, 64, 74, 84) on the surface of the second structure layer (52, 62, 72, 82) is 50-1000 recycled particles per 100 square centimeters (50-1000 recycled particles/100 cm²).

In one preferred embodiment of the present invention, the particle size of the plurality of recycled particles (54, 64, 74, 84) ranges from 1mm to 8mm.

In one preferred embodiment of the present invention, the first structure layer (50, 60, 70, 80) is a base fabric layer or a thermoplastic elastomer meltblown layer, in which the base fabric layer is woven fabric, non-woven fabric or fiber artificial leather, and thermoplastic elastomer meltblown layer is thermoplastic polyurethane (TPU).

In one preferred embodiment of the present invention, the second structure layer (52, 62, 72, 82) is thermoplastic elastomer meltblown bonding layer.

In one preferred embodiment of the present invention, the third structure layer (56, 66, 76, 86) is a thermoplastic elastomer meltblown layer or a thermoplastic elastomer surface layer.

According to the above, the present invention further discloses another thermoplastic artificial leather (5a, 5b, 6a, 6b, 7a, 7b, 8a, 8b), which includes a first structure layer (50, 60, 70, 80), a second structure layer (52, 62, 72, 82), a plurality of recycled particles (54, 64, 74, 84), and a third structure layer (56, 66, 76, 86), in which the second structure layer (52, 62, 72, 82) is arranged on the first structure layer (50, 60, 70, 80), the plurality of recycled particles (54, 64, 74, 84) is arranged on the surface of the second structure layer (52, 62, 72, 82), and the third structure layer (56, 66, 76, 86) covers a plurality of recycled particles (54, 64, 74, 84), to form an environmentally friendly thermoplastic artificial leather (5a, 5b, 6a, 6b, 7a, 7b, 8a, 8b).

In one preferred embodiment of the present invention, the first structure layer (50, 60, 70, 80) is a base fabric layer or a thermoplastic elastomer meltblown layer, in which the base fabric layer is woven fabric, non-woven fabric or fiber artificial leather, and thermoplastic elastomer meltblown layer is thermoplastic polyurethane (TPU).

In one preferred embodiment of the present invention, the density range of the plurality of recycled particles (54, 64, 74, 84) on the surface of the first structure layer (50, 60, 70, 80) is 50-1000 recycled particles per 100 square centimeters (50-1000 recycled particles/100 cm²).

In one preferred embodiment of the present invention, the particle size of the plurality of recycled particles (54, 64, 74, 84) ranges from 1mm to 8mm.

In one preferred embodiment of the present invention, the second structure layer (52, 62, 72, 82) is thermoplastic elastomer meltblown bonding layer.

In one preferred embodiment of the present invention, the third structure layer (56, 66, 76, 86) is a thermoplastic elastomer meltblown layer or a thermoplastic elastomer surface layer.

### BRIEF DESCRIPTION OF THE DRAWINGS

FIG. 1 is a schematic flow chart showing the steps of a manufacturing method of thermoplastic artificial leather (5a, 5b, 6a, 6b, 7a, 7b, 8a, 8b) according to the technology disclosed in the present invention.
FIG. 2 is a schematic flow chart showing the steps of a manufacturing method of another embodiment of thermoplastic artificial leather (5a, 5b, 6a, 6b, 7a, 7b, 8a, 8b) according to the technology disclosed in the present invention.
FIG. 3A is a schematic cross-sectional view of an embodiment of the structure of the thermoplastic artificial leather 5a produced according to the step flow chart of FIG. 1.
FIG. 3B is a schematic cross-sectional view of another embodiment of the structure of thermoplastic artificial leather 5b produced according to the step flow chart of FIG. 2.
FIG. 4A is a schematic cross-sectional view of an embodiment of the structure of a thermoplastic artificial leather 6a produced according to the step flow chart of FIG. 1.
FIG. 4B is a schematic cross-sectional view of another embodiment of the structure of thermoplastic artificial leather 6b produced according to the step flow chart of FIG. 2.
FIG. 5A is a schematic cross-sectional view of an embodiment of the structure of a thermoplastic artificial leather 7a produced according to the step flow chart of FIG. 1.
FIG. 5B is a schematic cross-sectional view of another embodiment of the structure of thermoplastic artificial leather 7b produced according to the step flow chart of FIG. 2.
FIG. 6A is a schematic cross-sectional view of an embodiment of the structure of a thermoplastic artificial leather 8a produced according to the step flow chart of FIG. 1.
FIG. 6B is a schematic cross-sectional view of another embodiment of the structure of thermoplastic artificial leather 8b produced according to the step flow chart of FIG. 2.

### DETAILED DESCRIPTION OF THE PREFERRED EMBODIMENT

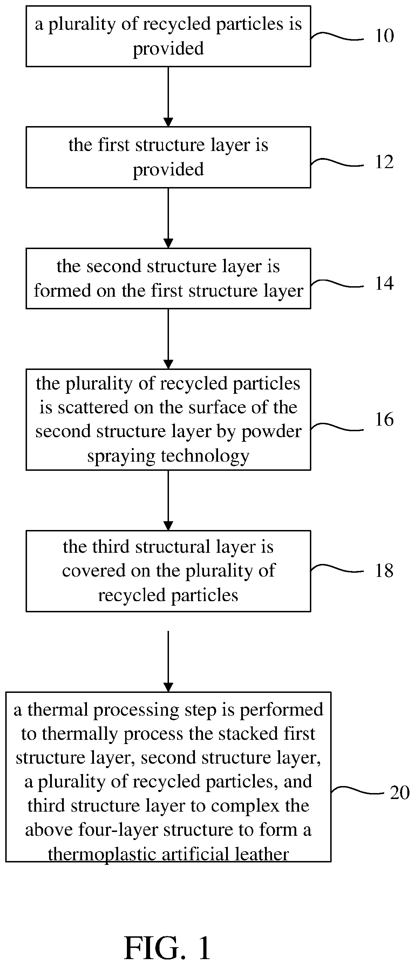

Please refer to FIG. 1. FIG. 1 is a schematic flow chart showing the steps of a manufacturing method of thermoplastic artificial leather (5a, 5b, 6a, 6b, 7a, 7b, 8a, 8b) according to the technology disclosed in the present invention. In FIG. 1, step 10: a plurality of recycled particles (54, 64, 74, 84) is provided. In this step, the recycled particles are obtained by cutting, crushing or grinding the recycled artificial leather, thermoplastic polyurethane (TPU) and waste yarn, or any two or three treatment methods mentioned above. In the embodiment of the present invention, the particle size of the plurality of recycled particles is too large, it may be affected the coating effect of the composite material on the plurality of recycled particles in the subsequent thermal processing process. Therefore, in the embodiment of the present invention, the particle size of the plurality of recycled particles (54, 64, 74, 84) is less than 8mm, the particle size range is 1mm-5mm, and the preferred particle size range is 1mm-3mm. For example, the plurality of recycled particles (54, 64, 74, 84) with small particle size range can be applied to products with high durability, such as shoe soles or as PU runway filler. The plurality of recycled particles with a large particle size range can be applied to products that do not emphasize durability, such as trademarks or decorative strips that emphasize visual effects.

Step 12: the first structure layer (50, 60, 70, 80) is provided. In this step, the first structure layer (50, 60, 70, 80) is a base fabric layer or a thermoplastic elastomer meltblown layer, in which the base fabric layer is a base material such as woven fabric, non-woven fabric or fiber artificial leather. The thermoplastic elastomer meltblown layer is thermoplastic polyurethane.

Step 14: the second structure layer (52, 62, 72, 82) is formed on the first structure layer (50, 60, 70, 80). In this step, the material of the second structure layer (52, 62, 72, 82) is a thermoplastic elastomer meltblown bonding layer. Next, Step 16: the plurality of recycled particles (54, 64, 74, 84) is scattered on the surface of the second structure layer (52, 62, 72, 82) by powder spraying technology. In this step, the plurality of recycled particles (54, 64, 74, 84) is formed by cutting, crushing and/or grinding or combining the above two or three methods are scattered on the surface of the second structure layer (52, 62, 72, 82) by using the powder spreading technology. In one embodiment of the present invention, the first structure layer (50, 60, 70, 80) stacked with the second structure layer (52, 62, 72, 82) is arranged on a continuous conveyor belt (not shown). Through the dusting device (not shown) above the conveyor belt (not shown), the plurality of recycled particles (54, 64, 74, 84) is scattered on the surface of the second structure layer (52, 62, 72, 82) in a continuous manner. The object of using the dusting device (not shown) can control the particle size and density of the plurality of recycled particles (54, 64, 74, 84) scattered on the surface of the second structure layer (52, 62, 72, 82). In one embodiment of the present invention, the dusting device (not shown) is a vibrating dusting device, an electrical dusting device, an electrostatic dusting device, or a cyclone dusting device.

It should be illustrated that the density of plurality of recycled particles (54, 64, 74, 84) scattered on the surface of the second structure layer (52, 62, 72, 82) refers to the number of the plurality of recycled particles (54, 64, 74, 84) per 100 square centimeters on the surface of the second structure layer (52, 62, 72, 82). In one embodiment of the present invention, according to the above steps, the density range of spraying the plurality of recycled particles (54, 64, 74, 84) on the second structure layer (52, 62, 72, 82) by the dusting device (not shown) is 50-1,000 recycled particles per 100 square centimeters (50-1,000 recycled particles/100 cm²) according to above steps. In another embodiment, the density range of the plurality of recycled particles (54, 64, 74, 84) scattered on the second structure layer (52, 62, 72, 82) is 100-700 recycled particles per 100 square centimeter area (100-700 recycled particles/100 cm²). In another preferred embodiment, the density range of recycled particles scattered on the second structure layer (52, 62, 72, 82) is 200-400 recycled particles per 100 square centimeter area (200-400 recycled particles/100 cm²).

Then, step 18: the third structural layer (56, 66, 76, 86) is covered on the plurality of recycled particles (54, 64, 74, 84). In this step, the material of the third structure layer (56, 66, 76, 86) is a thermoplastic elastomer meltblown layer or a thermoplastic elastomer layer, in which the thermoplastic elastomer meltblown layer and the thermoplastic elastomer layer is thermoplastic polyurethane.

Next, step 20: a thermal processing step is performed to thermally process the stacked the first structure layer (50, 60, 70, 80), the second structure layer (52, 62, 72, 82), the plurality of recycled particles (54, 64, 74, 84), and the third structure layer (56, 66, 76, 86) to complex the above four-layer structure to form a thermoplastic artificial leather (5a, 5b, 6a, 6b, 7a, 7b, 8a, 8b). In this step, the thermal processing process is carried out according to the stacked structure in above steps 12-18, in which the thermal processing process at least includes pressurization, heating and complex. When the thermal processing process is carried out, the heating temperature of the first thermal processing process is controlled to be equal to the melting point of the thermoplastic elastomer meltblown bonding layer in the first thermal processing process. The thermoplastic elastomer meltblown bonding layer is melted and combined with the first structure layer (50, 60, 70, 80) and the plurality of recycled particles (54, 64, 74, 84) above the second structure layer (52, 62, 72, 82) at the same time. Then, the second thermal processing process is carried out. During the second thermal processing process, the heating temperature is raised to the melting point of the third structure layer (56, 66, 76, 86), so that the third structure layer (56, 66, 76, 86) will melt into liquid state to cover the plurality of recycled particles (54, 64, 74, 84), and the first structure layer (50, 60, 70, 80) and the third structure layer (56, 66, 76, 86) are bonded through the thermoplastic elastomer meltblown layer as the second structure layer (52, 62, 72, 82), so the peel strength, durability, integrity and compactness of the overall thermoplastic artificial leather (5a, 5b, 6a, 6b, 7a, 7b, 8a, 8b) may be increased. The pressure applied to the stacked structure in the thermal processing process is 3 kg/cm²-10kg/cm², and the heating temperature of the thermal processing is generally set according to the melting point of the second structure layer (52, 62, 72, 82) and the third structure layer (56, 66, 76, 86), that is, the heating temperature of the thermal processing temperature is higher than the melting point of the second structure layer (52, 62, 72, 82), but lower than or equal to the melting point of the third structure layer (56, 66, 76, 86), so that the third structure layer (56, 66, 76, 86) can completely cover the plurality of recycled particles (54, 64, 74, 84) when the third structure layer (56, 66, 76, 86) is melted into a liquid state. Therefore, the heating temperature range of the thermal processing process is 80°C-140°C, and the preferred heating temperature range is 80°C-110°C.

In addition, since the second structure layer (52, 62, 72, 82) has the characteristics of adhesion and bonding, the first structure layer (50, 60, 70, 80) and the third structure layer (56, 66, 76, 86) are adhered and bonded together during the thermal processing process. For example, if the first structure layer (50, 60, 70, 80) is a base fabric layer and the third structure layer (56, 66, 76, 86) is a thermoplastic elastomer meltblown layer or a thermoplastic elastomer surface layer, the material of the base fabric layer can be woven fabric, non-woven fabric or fiber artificial leather. The material of thermoplastic elastomer meltblown layer or thermoplastic elastomer surface layer is thermoplastic polyurethane. The poor adhesion due to the different materials between the base fabric layer and thermoplastic elastic meltblown layer or thermoplastic elastomer surface layer. Therefore, the thermoplastic elastomer meltblown bonding layer as the second structure layer (52, 62, 72, 82) is used to improve the thermal plasticity after the whole thermal processing, the tightness of artificial leather and the bonding ability.

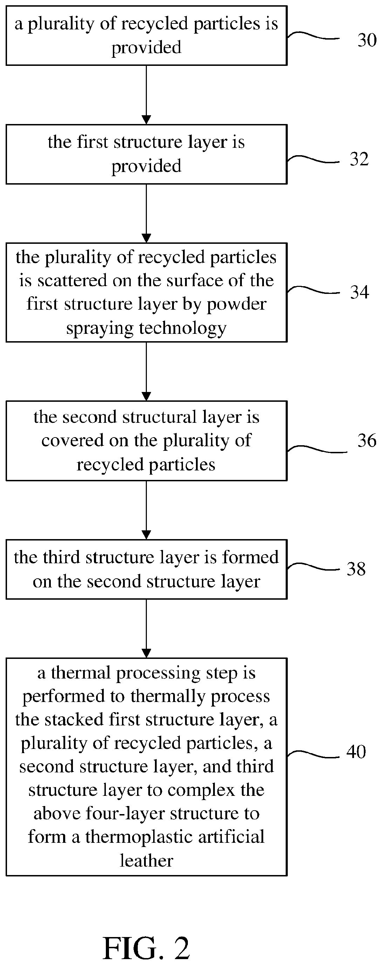

Next, please refer to FIG. 2. FIG. 2 is a flow chart showing a manufacturing method and steps of another embodiment of thermoplastic artificial leather (5a, 5b, 6a, 6b, 7a, 7b, 8a, 8b) according to the technology disclosed in the present invention. The difference between FIG. 2 and FIG. 1 is that in the step flow of FIG. 2, the plurality of recycled particles (54, 64, 74, 84) is scattered on the surface of the first structure layer (50, 60, 70, 80) by powder spraying technology (Step 34), and then Step 36: the second structure layer (52, 62, 72, 82) is covered the plurality of recycled particles (54, 64, 74, 84). Step 38: the third structure layer (56, 66, 76, 86) is formed on the second structure layer (52, 62, 72, 82), while Step 30, Step 32 and step 40 are the same as Step 10, Step 12 and Step 20 in FIG. 1. Other functions or material properties related to the first structure layer (50, 60, 70, 80), the second structure layer (52, 62, 72, 82), the third structure layer (56, 66, 76, 86) and the plurality of recycled particles (54, 64, 74, 84) are the same as those in FIG. 1, which will not be repeated herein.

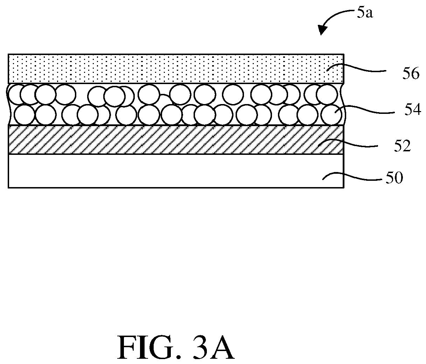

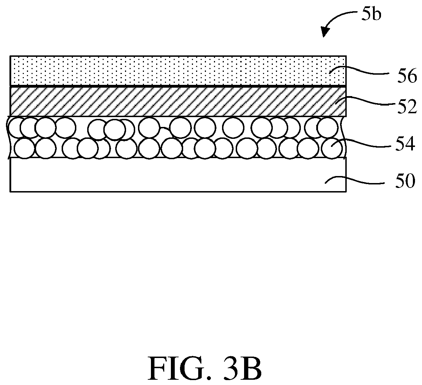

Next, please refer to FIG. 3A and FIG. 3B. FIG. 3A is a schematic cross-sectional view of an embodiment of the structure of thermoplastic artificial leather 5a produced according to the step flow chart of FIG. 1, and FIG. 3B is a schematic cross-sectional view of another embodiment of the structure of thermoplastic artificial leather 5b produced according to the step flow chart of FIG. 2. It should be noted that the functions and materials of each structure layer in FIG. 3A and Fig. 3B have been described in detail above, and will not be repeated herein. In FIG. 3A, the thermoplastic artificial leather 5a includes a first structure layer 50, a second structure layer 52 arranged on the first structure layer 50, a plurality of recycled particles 54 arranged on the second structure layer 52, and a third structure layer 56 covering the plurality of recycled particles 54. In FIG. 3B, the structure of the thermoplastic artificial leather 5b is to replace the position of the second structure layer 52 and the plurality of recycled particles 54 in FIG. 3A, that is, the plurality of recycled particles 54 are first arranged on the first structure layer 50, then the second structure layer 52 covers the plurality of recycled particles 54, and the third structure layer 56 is arranged on the second structure layer 52. In FIG. 3A and FIG. 3B, the first structure layer 50 is the base fabric layer. The second structure layer 52 is a thermoplastic elastomer meltblown bonding layer, and the third structure layer 56 is a thermoplastic elastomer meltblown layer.

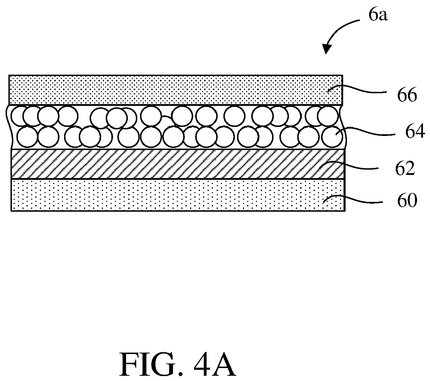

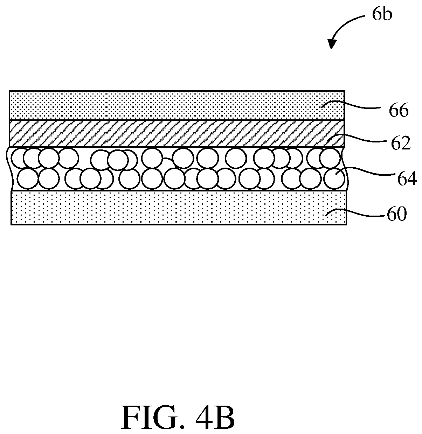

Please refer to FIG. 4A and FIG. 4B. FIG. 4A is a schematic cross-sectional view of an embodiment of the structure of thermoplastic artificial leather 6a produced according to the step flow chart of FIG. 1, and FIG. 4B is a schematic cross-sectional view of another embodiment of the structure of thermoplastic artificial leather (5a, 5b, 6a, 6b, 7a, 7b, 8a, 8b) produced according to the step flow chart of FIG. 2. The thermoplastic artificial leather 6a shown in FIG. 4A includes a first structure layer 60, a second structure layer 62, a plurality of recycled particles 64, and a third structure layer 66, in which the second structure layer 62 is arranged on the first structure layer 60, the plurality of recycled particles 64 are arranged on the second structure layer 62, and the third structure layer 66 covers the plurality of recycled particles 64. In FIG. 4B, the structure of the thermoplastic artificial leather 6b is to replace the position of the second structure layer 62 and the plurality of recycled particles 64 in FIG. 4A, that is, the plurality of recycled particles 64 are first arranged on the first structure layer 60, then the second structure layer 62 covers the plurality of recycled particles 64, and the third structure layer 66 is arranged on the second structure layer 62. The difference between FIG. 4A and FIG. 3A or FIG. 4B and FIG. 3B is that the first structure layer 60 of thermoplastic artificial leather 6a and 6b shown in FIG. 4A and FIG. 4B is a thermoplastic elastic meltblown layer, while the first structure layer 50 of thermoplastic artificial leather 5a and 5b shown in FIG. 3A and FIG. 3B is a base fabric layer.

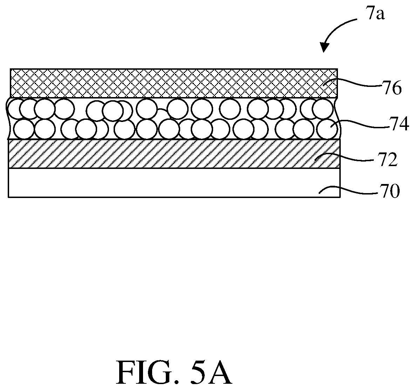

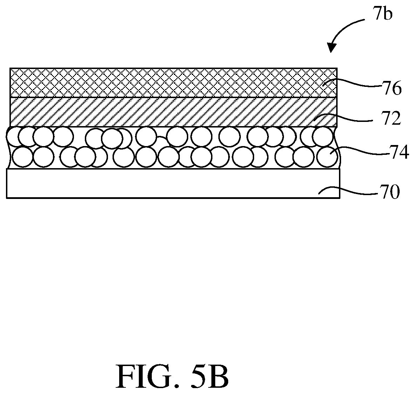

Please refer to FIG. 5A and FIG. 5B. FIG. 5A is a schematic cross-sectional view of an embodiment of the structure of thermoplastic artificial leather 7a produced according to the step flow chart of FIG. 1, and FIG. 5B is a schematic cross-sectional view of another embodiment of the structure of thermoplastic artificial leather 7b produced according to the step flow chart of FIG. 2. In FIG. 5A, the thermoplastic artificial leather 7a includes a first structure layer 70, a second structure layer 72 arranged on the first structure layer 70, a plurality of recycled particles 74 arranged on the second structure layer 72, and a third structure layer 76 covering the recycled particles 74. In FIG. 5B, the structure of thermoplastic artificial leather 7b is to replace the position of the second structure layer 72 and the plurality of recycled particles 74 in FIG. 5A, that is, the plurality of recycled particles 74 are first arranged on the first structure layer 70, then the second structure layer 72 covers the plurality of recycled particles 74, and the third structure layer 76 is arranged on the second structure layer 72. In FIG. 5A and FIG. 5B, the first structure layer 70 is a base fabric layer. The second structure layer 72 is a thermoplastic elastomer meltblown bonding layer, and the third structure layer 76 is a thermoplastic elastomer surface layer.

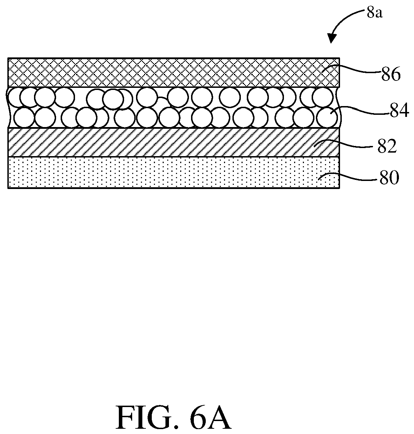

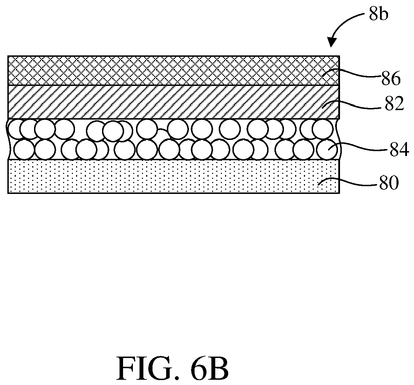

Please refer to FIG. 6A and FIG. 6B. FIG. 6A is a schematic cross-sectional view of an embodiment of the structure of thermoplastic artificial leather 8a produced according to the step flow chart of FIG. 1, and FIG. 6B is a schematic cross-sectional view of another embodiment of the structure of thermoplastic artificial leather 8b produced according to the step flow chart of FIG. 2. In FIG. 6A, the thermoplastic artificial leather 8a includes a first structure layer 80, a second structure layer 82 arranged on the first structure layer 80, a plurality of recycled particles 84 arranged on the second structure layer 82, and a third structure layer 86 covering the plurality of recycled particles 84. In FIG. 6B, the structure of the thermoplastic artificial leather 8b is to replace the position of the second structure layer 82 and the plurality of recycled particles 84 in FIG. 8A, that is, the plurality of recycled particles 84 are first arranged on the first structure layer 80, then the second structure layer 82 covers the plurality of recycled particles 84, and the third structure layer 86 is arranged on the second structure layer 82. In FIG. 6A and FIG. 6B, the first structure layer 80 is a thermoplastic elastomer meltblown layer, the second structure layer 82 is a thermoplastic elastomer meltblown bonding layer, and the third structure layer 86 is a thermoplastic elastomer surface layer.

According to the above, the thermoplastic artificial leather (5a, 5b, 6a, 6b, 7a, 7b, 8a, 8b)disclosed by the invention and its process method. In the process, the recycled particles are remanufactured by powder spreading technology and composite material technology to form an environmentally friendly and thermoplastic artificial leather (5a, 5b, 6a, 6b, 7a, 7b, 8a, 8b) substrate, and the materials such as artificial leather, TPU and/or waste yarn are treated in a physical way, it can solve the environmental protection problem caused by the use of solvents to deal with recycled artificial leather, TPU and/or waste yarn and other materials in the prior art, and reprocess the recycled artificial leather, TPU and/or waste yarn and other materials by using the characteristics of each material without using any solvents, greatly reducing the environmental pollution and production cost.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A thermoplastic artificial leather (5a, 5b, 6a, 6b, 7a, 7b, 8a, 8b), comprising:
a first structure layer (50, 60, 70, 80);
a second structure layer (52, 62, 72, 82), which is disposed on the first structure layer (50, 60, 70, 80);
a plurality of recycled particles (54, 64, 74, 84), which disposed on a surface of the second structure layer(50, 60, 70, 80); and
a third structure layer (56, 66, 76, 86), which is disposed to cover the plurality of recycled particles (54, 64, 74, 84).

2. The thermoplastic artificial leather (5a, 5b, 6a, 6b, 7a, 7b, 8a, 8b) of claim 1, wherein the first structure layer (50, 60, 70, 80) is a base fabric layer or a thermoplastic elastomer meltblown layer.

3. The thermoplastic artificial leather (5a, 5b, 6a, 6b, 7a, 7b, 8a, 8b) of claim 2, wherein the base fabric layer is woven fabric, non-woven fabric, or fiber artificial leather.

4. The thermoplastic artificial leather (5a, 5b, 6a, 6b, 7a, 7b, 8a, 8b) of claim 2, wherein the thermoplastic elastomer meltblown layer is thermoplastic polyurethane (TPU).

5. The thermoplastic artificial leather (5a, 5b, 6a, 6b, 7a, 7b, 8a, 8b) of claim 1, wherein the density range of the plurality of recycled particles (54, 64, 74, 84) on the surface of the second structure layer (52, 62, 72, 82) is 50-1000 recycled particles per 100 square centimeters of area.

6. The thermoplastic artificial leather (5a, 5b, 6a, 6b, 7a, 7b, 8a, 8b) of claim 1, wherein the second structure layer (52, 62, 72, 82) is a thermoplastic elastomer meltblown bonding layer.

7. The thermoplastic artificial leather (5a, 5b, 6a, 6b, 7a, 7b, 8a, 8b) of claim 1, wherein the third structure layer (56, 66, 76, 86) is a thermoplastic elastomer meltblown layer or thermoplastic elastomer surface layer.

8. A thermoplastic artificial leather (5a, 5b, 6a, 6b, 7a, 7b, 8a, 8b), comprising:
a first structure layer (50, 60, 70, 80);
a plurality of recycled particles (54, 64, 74, 84), which disposed on a surface of the first structure layer (50, 60, 70, 80);
a second structure layer (52, 62, 72, 82), which is disposed to cover the plurality of recycled particles (54, 64, 74, 84); and
a third structure layer (56, 66, 76, 86), which is disposed on the second structure layer (52, 62, 72, 82).

9. The thermoplastic artificial leather (5a, 5b, 6a, 6b, 7a, 7b, 8a, 8b) of claim 8, wherein the density of the plurality of recycled particles (54, 64, 74, 84) on the surface of the first structure layer (50, 60, 70, 80) ranges from 50 to 1,000 recycled particles per 100 square centimeters of area.

10. The thermoplastic artificial leather (5a, 5b, 6a, 6b, 7a, 7b, 8a, 8b) of claim 8, wherein the first structure layer (50, 60, 70, 80) is a base fabric layer or a thermoplastic elastomer meltblown layer.

11. The thermoplastic artificial leather (5a, 5b, 6a, 6b, 7a, 7b, 8a, 8b) of claim 10, wherein the base fabric layer is woven fabric, non-woven fabric or fiber artificial leather.

12. The thermoplastic artificial leather (5a, 5b, 6a, 6b, 7a, 7b, 8a, 8b) of claim 10, wherein the thermoplastic elastomer meltblown layer is thermoplastic polyurethane (TPU).

13. The thermoplastic artificial leather (5a, 5b, 6a, 6b, 7a, 7b, 8a, 8b) of claim 8, wherein the second structure layer (52, 62, 72, 82) is a thermoplastic elastomer meltblown bonding layer.

14. The thermoplastic artificial leather (5a, 5b, 6a, 6b, 7a, 7b, 8a, 8b) of claim 8, wherein the third structure layer (56, 66, 76, 86) is a thermoplastic elastomer meltblown layer or thermoplastic elastomer surface layer.
